# EUROPÄISCHE PATENTANMELDUNG

(11) **EP 1 798 681 A1**
(43) Veröffentlichungstag der Anmeldung: **20.06.2007**
(21) Anmeldenummer: 06124354.9
(22) Anmeldetag: 17.11.2006
(51) Int. Cl.: G06Q 20/00, G06Q 50/00

(54) **Verfahren zur Übertragung von digitalen Daten zwischen einem mobilen Gerät und einem Anzeigeterminal**

(30) Priorität: 16.12.2005 DE 102005060746
(71) Anmelder: Isbac GMBH, D-65520 Bad Camberg (DE)
(72) Erfinder: Winkler, Juergen, 65618Selters Münster (DE)
(74) Vertreter: Patentanwälte Kewitz & Kollegen

(57) **Zusammenfassung**

Die Erfindung betrifft ein Verfahren und Vorrichtungen zur drahtlosen Kommunikation eines mobilen Endgerätes eines Benutzers mit einer Anzeigeeinheit, wobei die Anzeigeeinheit mit einem Decoder und einer RFID-Leseeinrichtung verbunden ist, und das mobile Endgerät einen RFID-Tag aufweist, umfassend folgende Schritte:
- Anruf des Decoders durch das mobile Endgerät;
- Steuern der Anzeigeeinheit durch Eingaben in das mobile Endgerät, wobei die Eingaben durch den Decoder umgewandelt werden und als Befehle an die Anzeigeeinheit weitergeleitet werden;
- Auf der Basis eines vorgegebenen Ereignisses in Bezug auf die Anzeigeeinheit und/oder die Befehle des mobilen Endgerätes, liest die RFID-Leseeinrichtung den RFID-Tag des mobilen Endgerätes ein und vervollständigt die Eingaben, die durch das mobile Endgerät bisher über die Tastatur vorgenommen wurden.

## Beschreibung

Die Erfindung betrifft ein Verfahren zur Kommunikation mit einer Anzeigeeinheit über das Internet.

### Überblick:

Mobile Geräte sind als Medium für digitale Transaktionsvorgänge geeignet. Dies ist auf ihre eindeutig zu bestimmende Identität, ihre Sicherheitsfunktionen - wie etwa die PIN-Eingabe, die vorhandene Zahlungsbeziehung zum Mobilfunkbetreiber , die Tendenz, dass die Menschen mehr mobile Geräte besitzen, als es PCs mit Internet-Anschluss gibt, sowie die Kommunikationsfähigkeiten mit anderen Geräten, z. B. über Infrarot- oder RFID-Schnittstellen zurückzuführen. Hieraus ergibt sich, dass mobile Geräte geeignet sind Kredit- und EC-Karten oder Zugangsberechtigungen wie Tickets, Skipässe und vieles mehr abzulösen.
Die Tendenz dazu, dass es mehr mobile Geräte gibt oder in Kürze geben wird, als je PCs existieren werden, zeigt, dass die Schwerpunkte im Bereich der sicheren Kommunikation sich in der nächsten Zeit auf die mobilen Geräte verlagern wird.
Sehr viele Anwender sind mit der Handhabung von Fernbedienungen vertraut. Ein Handy kann ebenso gut als Fernbedienung verwendet werden, wie das uns bekannte Steuerungsgerät für den Fernseher.

### Überblick über die Erfindung:

Das Konzept vorliegender Erfindung ist modular aufgebaut. Die Erfindung umfasst in einer bevorzugten Ausführungsform folgende Module:
- Portal-Software Server im Internet
- Betriebssystem-Software Blackbox für den Decoder
- Betriebssystem-Software für RFID-Einheit
- Bildschirm (außen oder innen)
- RFID-Einheit für "Lesen und Schreiben"
- einen anrufbaren Decoder
- ein Kontaktsystem nicht anrufbar
- ein passiver RFID-Tag (Label, Karte oder Modul)
- Handy (passive Verifizierung über Servicenummer)
- Aktiver RFID-Tag

Die Portalsoftware dient zum Einstellen der Werbung und der Konzeptebene.
Auf dem Decoder können zwei Ebenen realisiert sein. Einerseits die Dauerwerbung (a) und andererseits die interaktive Konzeptebene (b).

Tritt der Benutzer mit dem Decoder in Kontakt, dann wechselt das System in die Konzeptebene - also von (a) zu (b). Beendet der Benutzer den Kontakt, dann wechselt das System von Ebene (b) nach Ebene (a).

Der Benutzer kann über die folgenden Varianten/Wege mit dem Decoder in Kontakt treten: Handy, RFID, Berührung, Klassische Tastatur oder Maus, Sonstiges (z.B. Infrarot, Bluetooth usw.) Um einen Prozess aus der interaktiven Konzept-Ebene (b) abzuschließen, werden das Handy und die RFID-Einheit wechselseitig eingesetzt, um (1) einen Prozess anzustoßen, (2) um einen Prozess abzuschließen oder (3) beide Prozesse zusammen.
Ein Beispiel zu (1) kann darin liegen, einen Prozess anzustoßen für z. B. "erklärungsbedürftige" Güter.
Ein Beispiel zu (2) kann darin liegen, einen Prozess mit der RFID-Einheit zu beenden oder zu bestätigen, wenn die erfindungsgemäße Vorrichtung nach dem RFID-Tag fragt.
So können jetzt Informationen aus dem RFID-Tag gelesen werden, wie die elektronische Visitenkarte (Lieferadresse), Zusatzinformationen, um einen Prozess individuell zu gestalten (Beispiel: Allergie-Pass) oder Anzeigen von Bonuspunkten und die dazugehörenden Preise/Prämien
Alternativ können natürlich auch Informationen wie Bonuspunkte geschrieben werden, wie beim Initialisierungsprozess der E-Visitenkarte.
Ein Beispiel zu (3), bei dem beide Prozesse zusammen laufen, kann darin liegen, dass ein Lesen und Schreiben auf die passiven RFID-Tags erfolgt, um einen Kauf durchzuführen, und dann eine Bestätigung (oder Bonus) auf den RFID-Tag zurück zuschreiben.

Die hier beschriebene Erfindung kombiniert vorhandene Technologien in völlig neuartiger Form. Dabei werden die Features und Möglichkeiten von einem spezialisierten PC-Client-System, Mobiltelefonen, der RFID-Technologie und Datenbank-basierten Web-Applikationen so angeordnet und gekoppelt, dass die in den Ansprüchen beschriebene Prozesse ermöglicht werden.
Im einzelnen sind folgende Teilschritte zu unterscheiden.
- KONTAKTAUFNAHME: Der Benutzer nimmt entweder via Handy Kontakt mit dem System auf - das heißt, er ruft das System an (normaler Anruf ohne Einbeziehung von Zusatzsoftware o. ä.) oder er bedient das System klassisch über eine Tastatur (+ Mouse etc.) bzw. über ein anderes Kontaktmedium (z. B. Fernbedienung);
- ARTIKELAUSWAHL: Der Benutzer wählt den zu bestellenden Artikel / Service / etc. über die Tastatur (z. B. des Handys) aus;
- KAUF-INITIIERUNG: Der Benutzer veranlasst eine Aktion in Bezug zum ausgewählten Artikel. Dies kann ein Kauf durch eine Bestätigung bzgl. des ausgewählten Artikels per (Handy-) Tastatur sein;
- ANFORDERN DER ERSTEN BESTÄTIGUNG: Das System fordert nun den Benutzer auf, seinen RFID-Tag an die RFID-Lese-Einheit des Systems zu halten - z. B.: "Halten Sie bitte nun Ihre elektronische Visitenkarte an den Kontaktpunkt!";
- LIEFERN BESTÄTIGUNG 1: Der Benutzer führt seinen RFID-Tag an der Leseeinheit des Systems vorbei;
- ERMITTELN DER BENUTZER-DATEN: Das System liest die Daten des RFID-Tags mit 128KBit-Verschlüsselung aus;
   Der Kaufvertrag ist damit abgeschlossen. Das System veranlasst den anschließenden Prozess der Lieferung und Bezahlung wie folgt:
- AVISIERUNG: Durch das System wird eine Avisierungs-E-Mail gesendet an:
   a. Verkäufer (Information, welcher Benutzer welchen Artikel kaufen will usw.) - Detailinformationen zum Benutzer hält das System vor (ggf. auch Server-seitig);
   b. Benutzer (Information, welchen Artikel er von welchem Verkäufer kaufen will usw.) - Detailinformationen zum Verkäufer hat das System aus dem RFID-Tag des Verkäufers ermittelt;
   c. Bezahlpartner (z. B. Kreditkarten- oder Telekommunikationsfirma - Information, welcher Betrag von welchem Konto auf welches Konto transferiert werden soll) - Detailinformationen zum Bezahlpartner hält das System vor (ggf. auch Server-seitig);
- ANFORDERN DER ZWEITEN BESTÄTIGUNG: Der Kauf ist zur Sicherheit ein weiteres Mal durch den Benutzer zu bestätigen. Das System sendet dazu dem Benutzer Informationen, die dem Benutzer mitteilen, wie die ZWEITE BESTÄTIGUNG erfolgen kann. Folgende Varianten sind u. a. möglich: per E-Mail an den Verkäufer oder den Bezahlpartner, auf der Web-Site des Verkäufers oder des Bezahlpartners; via Rück-SMS an den Verkäufer oder den Bezahlpartner.
- LIEFERN BESTÄTIGUNG 2: Der Benutzer bestätigt seinen Kauf durch eine der im vorhergehenden Schritt genannten Varianten;
- LIEFERUNG: Nach Eingang der gültigen Bestätigung wird die Bezahlung und die Lieferung veranlasst und durchgeführt.
   Es wird darauf hingewiesen, dass einige dieser Schritte in alternativen Ausführungsformen zu vernachlässigen sind. Somit kann das Verfahren auch mit weniger oder noch mehr Schritten ausgeführt werden.
   Die Innovation schlägt sich u. a. darin nieder, dass zum Initiieren von nahezu beliebigen Transaktionen kein draht- oder berührungs-gebundener Kontakt mehr zwischen dem Benutzer und dem anbietenden System erforderlich ist. Ferner kann der gesamte Prozess ohne manuellen Aufwand für den Anbieter ablaufen. Das System kann weitgehend orts- und vollständig zeitunabhängig eingesetzt werden (24 Stunden-Werbe- und Verkaufskanal). Alle diese Eigenschaften eröffnen dem System eine Unzahl von Einsatzmöglichkeiten und prinzipiell das Potenzial, das Werben und Verkaufen vor allem in Bereichen des Wartens und Verweilens zu revolutionieren.
   Auf kurze Distanzen kauft man zukünftig mittels der RFID-Funktion oder über Infrarot, während große Distanzen via Funknetz überwunden werden.
   Anwendungen auf dem System und / oder auf dem Handy-RFID-Gerät haben aber nicht nur Fernbedienungsfunktionen, die aktiv bedient werden können. Vielmehr "lauschen" sie auch im Hintergrund und melden sich bei Kontaktaufnahme mit dem Decoder automatisch, wenn ein gewünschtes Ereignis eingetroffen ist, über das der Benutzer Bescheid wissen sollte.
   Das können Aktienkurse, Pollenflugvorhersagen, Preisvergleiche ebenso sein wie Ergebnisse, die zuvor auf der RFID-Einheit definiert wurden. Es können Türen geöffnet werden und Schranken verschlossen werden - ganz wie bei allen ferngesteuerten Geräten zu Hause oder im Büro. Dienstleister gewähren Zutritte, die ohne zutun von Personal ermöglicht werden - nur durch übermitteln der entsprechenden Codexe. Es gibt also eine Art Proaktivität der Daten auf mobilen Endgeräten. Sie wird durch die mobilen Übertragungsstandards übertragen und ermöglicht damit ganz neue Dimensionen der mobilen Unterhaltung und Kommunikation.

Wenn man antizipiert, in welcher Weise das Aufeinandertreffen von Informationsökonomie und physischer Ökonomie die Zukunft des Einzelhandels verändern wird, so ist es ohne weiteres denkbar, dass die Händler demnächst "nur" noch Ausstellungsflächen zur Verfügung stellen, auf denen die Kunden Produkte begutachten, bewerten, berühren können. Die Transaktion wird dann per Handy mit Hilfe der beschriebenen erfindungsgemäßen Vorrichtung vorgenommen und auch mittels Handy bezahlt. Geliefert werden die Waren per Kurier-Service oder Logistik-Unternehmen.
Unternehmen, die möglichst direkte Kundenbeziehungen oder individualisierbare Angebote anstreben, werden vom erfindungsgemäßen Handy-Konzept besonders profitieren. Das Handy wird zum Sales Manager in der Hosentasche des Kunden. Es begleitet den Nutzer auf Schritt und Tritt, wenn er nur einmal den Weg zum Bildschirm gefunden hat.
Damit ergibt sich, dass die erfindungsgemäße Vorrichtung in Kombination mit einem entsprechenden Handy durch die ad-hoc und permanente Verfügbarkeit vor allem ideal für alle Produkte ist, welche durch Impulskäufe erworben werden können; für Produkte, bei deren Kauf die Verknüpfung von Informationsangeboten und Erlebnis physischer Qualitäten wie z. B. Fernseher, Immobilien, Autos, Gesundheit etc. zu einem Vorteil für den Nutzer führt.
Die Mobilität des Angebotes macht es möglich, dass der Benutzer in unterschiedlichsten Situationen oder Umgebungen auf das Angebot zugreifen kann. Durch die RFID-Technologie kann man nicht nur "Zahlsysteme" mittels Handy aufbauen, sondern gerade die in den RFID-Tags gespeicherten Informationen können effektiv zur Kundenbindung herangeführt werden.

Mittels der RFID-Tags kann das System "befragt" werden, um weiter reichende / umfassendere Informationen zu den Angeboten vom System abzurufen. Diese Informationen wiederum werden dann mittels der bezeichneten Schnittstellen auf das Handy übertragen und können hier mit den vorhandenen Mechanismen mittels Internet verglichen werden. Erklärungsbedürftige Güter werden so für jeden schnell und ohne Personalaufwand transparent.

Dadurch entsteht ein individueller Kontext, der den vorhandenen Content auf eine neue spezielle Weise nutzt und benutzt. Wenn die erfindungsgemäße Vorrichtung also somit "weiß", wo sich ein Anwender befindet, kann er aus den geographischen auch aktionsbezogene Informationen und Anwendungen ableiten und anbieten.
Es gibt folgende Arten von Kontext, auf die mobile Anwendungen Bezug nehmen können:
- lokaler Kontext: Hierbei kennt das System den Ort, an dem sich ein Nutzer befindet;
- aktionsbezogener Kontext: Mit dem Ort werden bestimmte Aktivitäten verknüpft;
- Zeitspezifischer Kontext: Mit dem Ort und der aktuellen Zeit können auch dynamische Daten verbunden werden, tagesaktuelle Angebote, Saisonangebote, Veranstaltungen, etc.;
- Interessenspezifischer Kontext: Die Präferenzen des Nutzers werden mit diesen Informationen gezielt angesprochen;
   Mit der Erfindung erwächst somit die Möglichkeit eines vollständig kontextbezogenen Angebots, das vom Nutzer erlebt wird, als würden "Heinzelmännchen" die aktuelle Situation und die Interessen des Nutzers kennen.
   Wenn der Benutzer genau und nur das (angeboten) bekommt, was er auch will, entstehen neue Möglichkeiten des Verkaufens und neue Möglichkeiten für Kundenbindungssysteme. Es ist doch nur konsequent, dass der Kunde an seinem eigenen Kundenwert partizipiert, und dies nicht nur mit den unterdessen verbreiteten singulären Bonuskarten sondern interdisziplinär mit seiner RFID-Handy-Einheit (ein RFID-Tag über viele oder alle Anbieter hinweg).

Mit dem erfindungsgemäßen Verfahren und dem Handy verhält es sich somit fast wie mit einem Lebewesen, das mit seiner Umgebung interagiert, Informationen aufnimmt und über gewisse Zeiträume aufgenommene Informationen in künstliche "Erfahrungen" (d. h. Profile) umsetzt.
Bei allen Prozessen, die mit der Erfindung dargestellt werden, ist der entscheidende Vorteil, dass Menschen mit dem Gerät kommunizieren können, wenn das gewollt ist. Zusammen mit dem RFID-Handy oder einem Handy mit RFID-ähnlicher Schnittstellenfunktion, mit Informationsspeicher wie IR oder Bluetooth, sind Menschen in der Lage, eine Aktion anzustoßen, an deren Ende ein Kauf oder eine Dienstleistung stehen kann. Dass Benutzer in die Lage versetzt werden, dies mit ihren Vorlieben verbinden zu können, macht die Sache nicht nur leichter und schneller, sondern erhöht das Potenzial des Systems noch einmal enorm.

### Beschreibung der Figuren

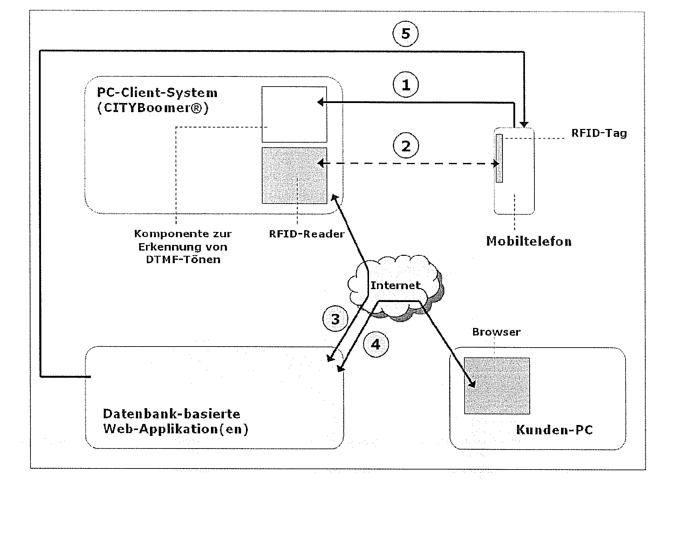

Fig. 1 zeigt den Ablauf des erfindungsgemäßen Verfahrens. Beschreibung der bevorzugten Ausführungsform

Die folgende Abbildung skizziert in vereinfachter Form den Aufbau des Gesamtsystems. Es sei nochmals darauf hingewiesen, dass das System auch in nicht komplettem Ausbau geeignet ist, neuartige Prozesse abzubilden.

Die Bestandteile des Gesamtsystems und ihr Zusammenwirken werden im Folgenden beschrieben.

Der Decoder ist ein spezialisiertes PC-System. Es ist in der Lage (Werbe-) Inhalte zu empfangen und auf vielfältigen Ausgabesystemem (Bildschirme, Beamer u. a. m. - in der Figur 1 nicht dargestellt) anzuzeigen. Dies basiert zum einen auf einer speziellen Hardware und zum anderen auf einer für diesen Zweck angepassten Systemsoftware, sowie der Player-Software, welche die Anzeige der (Werbe-)Inhalte ins Werk setzt.
Das System enthält möglichst keine mechanisch beweglichen Teile und ist daher geräuschlos. Es stellt diverse Schnittstellen für Verbindungen zum Internet und zu o. g. Ausgabemedien bereit und kann Audioausgaben realisieren.
Das System ist u. a. dafür ausgelegt, (Werbe-)Inhalte im Dauerbetrieb (so genannte Endlosschleife) anzuzeigen.
Zur Erweiterung der Einsatzmöglichkeiten des Decoders wird dieser Standardmäßig mit einer Komponente versehen, welche in der Lage ist, DTMF-Töne, wie sie von Mobiltelefonen generiert werden, zu empfangen, zu erkennen und in Steuerimpulse umzusetzen. Damit wird erreicht, dass Benutzer den Decoder anrufen können und interaktive Anteile der (Werbe-) Inhalte mit dem Mobiltelefon bedient werden können. Vereinfacht gesagt: Das Handy fungiert dann als Fernbedienung.

Damit ist es möglich, dass jede Person, die über ein handelsübliches Mobiltelefon verfügt, in der Lage ist, auf die Anzeige der (Werbe-)Inhalte Einfluss zu nehmen und darin implementierte Aktionen zu veranlassen. Dieses Vorgehen, welches in der obigen Figur 1 durch den Pfeil mit der Nummer 1 repräsentiert wird, konstituiert sich i. d. R. so, dass der Benutzer den Decoder anruft, woraufhin die in einer Endlosschleife angezeigten Inhalte unterbrochen werden und in den interaktiven Bereich umgeschaltet wird und (mit seinem Handy als Fernbedienung) durch den interaktiven Inhalt navigiert und schließlich z. B. Schaltfläche(n) betätigt.
Es sei hier explizit darauf hingewiesen, dass der Benutzer keinerlei Zusatzsoftware auf seinem Mobiltelefon benötigt und dass keinerlei Rückwirkung auf das Mobiltelefon erfolgt. Die Interaktion mit dem Decoder ist also für jeden sowohl einfach als auch sicher möglich.
Durch diesen Schritt der Hinzunahme einer Komponente, welche die Interaktion zwischen Decoder und Benutzer ermöglicht, wird der Decoder (im Rahmen des Systems) zu einem bidirektionalen Kanal. D. h. zum einen werden (Werbe-)Botschaften an Benutzer und Passanten übermittelt und zum anderen werden Informationen von Benutzern entgegen genommen. Die entgegen genommenen Informationen sind zum einen Navigationsbefehle durch die interaktiven Bereiche (z. B. mit der Taste "8" für "Weiter" zum nächsten Menüpunkt) des Inhalts und zum anderen Befehle, die - per Betätigung einer Schaltfläche (z. B. mit der Taste "#") - konkrete Aktionen auslösen wie das Versenden von SMS, MMS, E-Mails, das Bestellen, Reservieren von auf Decodern beworbenen Angeboten.
Das Auslösen von Aktionen resultiert in aller Regel darin, dass der Decoder E-Mails generiert. Diese E-Mails enthalten alle Informationen, welche jeweils nötig sind, um z. B. eine SMS an den Benutzer zu senden oder eine Artikelbestellung zu veranlassen. Die E-Mails werden an eine Datenbankbasierte Web-Applikation versandt (siehe Pfeil Nummer 3 in der Abbildung), die ihrerseits die E-Mails weiter verarbeitet und die jeweils intendierte Aktion (SMS-Versand, Kauf, usw.) tatsächlich ins Werk setzt.
Die nächste wesentliche Erweiterung des Systems wird durch die Integration der RFID-Technologie erreicht. Dies erfolgt zum einen so, dass eine RFID-Schreib-/Lese-Einheit mit in den Decoder eingebaut und mit der interaktiven Content-Funktionalität verbunden wird. Zum anderen werden an die potenziellen Benutzer RFID-Transponder (im Folgenden: RFID-Tags oder nur Tags) ausgegeben. Diese Tags enthalten eine elektronische Visitenkarte, welche durch die RFID-Schreib-/Lese-Einheit ausgelesen werden kann. Die Angaben auf dem Tag sind durch eine PIN geschützt. Tags können heute in den verschiedensten Ausprägungen geliefert werden - von Chips über Karten bis hin zur Integration in andere Geräte.
Mit der Einbeziehung der RFID-Komponenten werden folgende funktionelle Ziele erreicht:
- Benutzer müssen Angaben, die für eine Transaktion gebraucht werden (Zahlungsinformationen, Lieferadresse etc.), nicht mehr eingeben, sondern können diese berührungslos zu jeder Zeit an jedem Ort übertragen - der Decoder ermittelt die Informationen dann automatisch (s. a. Pfeil Nummer 2 in der Figur 1).
- Der Decoder ist in der Lage, die getroffene Auswahl des Benutzers (Kauf eines Artikels, Reservierung von Tickets, Anforderung von Information u. v. a. m.) mit den von der elektronischen Visitenkarte ermittelten Informationen zu verknüpfen und damit die komplette Transaktion zu veranlassen. Dies erfolgt, indem die RFID-System-Software mit der Player-Software des Decoders gekoppelt wird - d. h. beim Eintreten bestimmter RFID-Events in einem bestimmten Anwendungs- bzw. Content-Kontext, werden vorher festgelegte Aufrufe innerhalb der Player-Software veranlasst. Z. B. kann im Kontext einer durch den Benutzer getätigten Auswahl des Produkts X das autorisierte Einlesen der RFID-Informationen Y (der elektronischen Visitenkarte) in die Bestellung des Produkts X durch den Benutzer mit dessen Informationen Y umgesetzt werden.
   Somit steht eine Infrastruktur zur Verfügung, die in der Lage ist, alle Aspekte der Werbung und des Verkaufs abzudecken:

- Dauerwerbung, solange keine Kundeninteraktion erfolgt;
- Unbegrenzte Möglichkeiten der Angebotspräsentation im interaktiven Contentbereich;
- Einfache Möglichkeit der Auswahl von Offerten (Produkten, Dienstleistungen,...) über Mobiltelefon, das nahezu jede Person bei sich trägt
- Automatisierte Zuordnung der Zahlungs- und Lieferinformationen zur ausgewählten Offerte und
- Generierung der Transaktionsdaten inkl. Start/Veranlassung der Transaktion.
   Transaktionen wie der Kauf von Produkten sollten vorteilhafterweise gesichert bzw. autorisiert erfolgen. Nur diejenige Person, der die elektronische Visitenkarte gehört, darf diese auch zum Kauf, zu Bestellungen, zu Reservierungen, zu Anforderungen etc. verwenden. Dies ist in Analogie zu den heute verbreiteten EC-Karten zu betrachten.
   Der hier beschriebene DBIT-Prozess bietet die Sicherung auf einem noch höheren Niveau, denn die Transaktion ist in einer vorteilhaften Ausführungsform zweifach gesichert. Vor dem Auslesen der Daten wird erstens eine PIN abgefragt, welche der Benutzer per Handy-Tastatur eingeben kann und vor Einleitung des tatsächlichen Zahlungsprozesses erfolgt zweitens auf einem elektronischem Weg (E-Mail, SMS) eine weitere autorisierte Bestätigung des Wunsches des Benutzers (s. a. Pfeil Nummer 4 in der Figur 1).
   Nachdem der Zweck der RFID-Tags erläutert wurde, besteht der nächste Schritt darin, diese Tags in Mobiltelefone zu integrieren. Damit wird erreicht, dass diese Tags nicht mehr separat erworben werden müssen, sondern jeder Mobiltelefonbesitzer auch gleichzeitig Inhaber einer elektronischen Visitenkarte sein kann. Abgesehen davon wird ein simpler (billiger) RFID-Tag sicher einfacher verloren werden als ein (wertiges) Mobiltelefon.
   Der in das Mobiltelefon integrierte RFID-Tag und der Decoder liefern im Zusammenwirken mit dem Portal das komplette Umfeld, in welchem die in diesem Dokument beschriebene Vereinfachung des Kaufens, Bestellens, Reservierens etc. ablaufen kann - draht- und berührungslos im Rahmen des DBIT-Prozesses.

Das Portal ist ein Softwaresystem, kann natürlich auch in die entsprechende Hardware gegossen werden. Es ist eine datenbankbasierte Web-Applikation und somit überall per Browser benutzbar. Da es Bestandteil des Gesamtsystems und für den DBIT-Prozess sehr vorteilhaft ist, wird es im Folgenden kurz vorgestellt.
Das Portal nimmt alle von Decodern gesandten E-Mails entgegen und transformiert sie in die Transaktionen oder generiert daraus SMS- oder MMS-Nachrichten oder leitet die E-Mails an im Content hinterlegte Anbieter weiter und Registriert alle Informationen zum Betrieb und zur Nutzung der Decoder und erlaubt es den Betreibern des Systems, Content zu erstellen und zu verwalten.
Das Portal nimmt alle von Decodern generierten E-Mails entgegen. Solche E-Mails, welche die Anforderung von SMS- oder MMS-Nachrichten repräsentieren, werden automatisch in strukturierte E-Mails konvertiert, die an einen oder mehrere Telekommunikations-Provider gesendet werden. Diese Provider generieren aus den bei ihnen eingegangenen strukturierten E-Mails die tatsächlichen SMS- bzw. MMS-Nachrichten und versenden jene an das Mobiltelefon des jeweiligen Benutzers (Pfeil Nummer 5 in der Figur 1).
E-Mails, die nicht in SMS-, MMS- oder andere Nachrichten umgewandelt werden sollen, werden an die eingetragenen E-Mail-Adressaten weiter geleitet.
Auf den Decodern wird, wie weiter oben beschrieben wurde, Content dargestellt (automatisch ablaufender und interaktiv per Mobiltelefon benutzbarer). Das Portal enthält Funktionen, mit denen solcher Content erstellt, verwaltet und verteilt werden kann. Die Erstellung kann entweder mit einem integrierten Content-Designer erfolgen oder vorgefertigter Content kann per Upload in das System involviert werden.

Alle Decoder werden durch entsprechende Datensätze im Portal abgebildet und können hier verwaltet, in (auch geschachtelten) Gruppen organisiert und gepflegt werden.
Das Portal ermöglicht es den Betreibern des Systems, jederzeit festzulegen, welcher Content auf welchem Decoder dargestellt werden soll und wie häufig entsprechende Abgleiche zwischen den Informationen auf dem Server und dem Decoder erfolgen sollen. Im Rahmen der technischen Möglichkeiten können auch Systemeinstellungen der Decoder über das Portal konfiguriert werden.
Beim Betrieb des Systems fallen auf den Decodern Informationen an. Diese geben z. B. Auskunft darüber, welche Offerten wie oft nachgefragt wurden, welche Content-Spots wie häufig gelaufen sind, welcher Benutzer welche Transaktionen ausgelöst hat, u. v. a. m.
In der bzw. mit Portal-Anwendung selbst fallen Informationen darüber an, wer wann welche Content-Änderung vorgenommen hat, welche Decoder aktuell aktiv/inaktiv sind, welche Hardware- oder Abarbeitungsprobleme aufgetreten sind
Alle auf den Decodern anfallen Informationen werden automatisch bei den Abgleichprozessen zwischen dem Server und den Decodern auf den Server übertragen und dort in Datenbanken importiert. Damit stehen sie für vielerlei Auswertungen zur Verfügung. Analoges gilt für direkt auf dem Server anfallende Informationen, die entweder in Datenbanken oder in Log-Protokollen (welche auch Datenbanken sind) erfasst werden und somit ebenfalls für jedwede weitere Auswertung zur Verfügung stehen.
Vor dem Hintergrund der bisher in Abschnitt 6 eingeführten Begriffe und Komponenten wird im Folgenden der DBIT-Prozess noch einmal präzisiert nieder gelegt:
KONTAKTAUFNAHME (Schritt 1): Der Benutzer nimmt entweder via Mobiltelefon Kontakt mit dem Decoder auf - das heißt, er ruft das System an (normaler Anruf ohne Einbeziehung von Zusatzsoftware o. ä.) oder er bedient den interaktiven Teil des Contents klassisch über eine Tastatur (+ Mouse etc.) oder über ein anderes Kontaktmedium (z. B. Fernbedienung);
Der Decoder ist über das Internet mit dem Portal verbunden. Den Content zeigt der Decoder über ein nahezu frei wählbares Ausgabe-Medium (z. B. Plasma-Bildschirm oder Beamer) an.
ARTIKELAUSWAHL (Schritt 2): Durch den Anruf des Decoders wird dieser veranlasst, aus dem automatischen Modus in den interaktiven Modus umzuschalten. Nun hat der Benutzer die Möglichkeit, durch den interaktiven Teil des Contents - also z. B. durch verschiedene Produkt- und Service-Angebote zu navigieren (z. B. mit dr Taste "8" für "Weiter"). Schließlich entscheidet sich der Benutzer ggf. für einen zu bestellenden Artikel / Service / etc. und teilt dies dem Decoder über Eingaben auf der Tastatur (z. B. des Handys) mit. I. d. R. wird sich dies so gestalten, dass in interaktiven Content-Spot zu dem betreffenden Produkt eine Schaltfläche "Kaufen" (oder "Bestellen" o. ä.) implementiert ist, welche der Benutzer (z. B. mit der Taste "#") betätigen kann.
KAUF-INITIIERUNG: Der Benutzer veranlasst nun seinen Kauf /seine Bestellung durch eine Bestätigung bzgl. des ausgewählten Artikels per (Handy-)Tastatur. Der Decoder verbindet mit der Betätigung der betreffenden Schaltfläche ("Kaufen" oder "Bestellen" o. ä.) nun einen Prozess, der letztlich zur Generierung der hier initiierten Transaktion führen wird.

ANFORDERN BESTÄTIGUNG 1: Als ersten Schritt der Einleitung einer Transaktion ruft die Software des Decoders die RFID-System-Software auf und fordert darauf hin über eine Bildschirmausgabe den Benutzer auf, sein RFID-Tag an die (prominent gekennzeichnete) RFID-Lese-Einheit des Systems zu halten - Die Aufschrift kann z. B. lauten: "Halten Sie bitte nun Ihre elektronische Visitenkarte an den Kontaktpunkt!". Das RFID-Tag sollte der Benutzer im Vorfeld vom Betreiber des Systems oder von dessen Partnern (i. d. R. Anbieter von Produkten, die über den Content beworben werden) erhalten haben, oder es entspricht einem bestimmten Standard.
LIEFERN BESTÄTIGUNG 1: Der Benutzer führt sein RFID-Tag an der Leseeinheit des Decoders vorbei.
ERMITTELN DER BENUTZER-DATEN: Die RFID-System-Software liest die Daten (inkl. Der PIN) des RFID-Tags mit 128KBit-Verschlüsselung aus. Um die Aktion des Benutzers zu autorisieren, fordert nun der Decoder den Benutzer auf, seine PIN über die Tastatur des Mobiltelefons einzugeben.
ABSCHLUSS KAUFVERTRAG: Der Decoder vergleicht nun die durch den Benutzer eingegebene PIN mit der aus dem RFID-Tag ermittelten PIN. Nur wenn beide PINs übereinstimmen, ist der Kaufvertrag damit abgeschlossen und das System veranlasst den anschließenden Prozess der Lieferung und Bezahlung wie folgt:
AVISIERUNG: Durch den Decoder wird (über das Portal) eine Avisierungs-E-Mail gesendet an ...:
a. den Verkäufer (Information, welcher Benutzer welchen Artikel mit welcher Stückzahl kaufen will usw.) - Detailinformationen zum Verkäufer hält das System vor (ggf. auch Server-seitig)(Schritt 3);
b. den Benutzer (Information, welchen Artikel er von welchem Verkäufer zu welchem Preis kaufen will usw.)(Schritt 4) - Detailinformationen zum Verkäufer hat das System aus dem RFID-Tag des Benutzers ermittelt. Diese Information wird in eine SMS (Schritt 5) oder MMS umgesetzt und an das Mobiltelefon des Benutzers gesandt. Zusätzlich kann eine E-Mail an den Benutzer gesandt werden, wenn die elektronische Visitenkarte (auf dem RFID-Tag) eine E-Mail-Adresse ausweist.
c. den Bezahlpartner (z. B. Kreditkarten- oder Telekommunikationsfirma - Information, welcher Betrag, von welchem Konto auf welches Konto transferiert werden soll) - Detailinformationen zum Bezahlpartner hält das System vor (ggf. auch Server-seitig);
ANFORDERN BESTÄTIGUNG 2: Zur Gewährleistung der notwendigen Sicherheit kann der Prozess dann optional ein weiteres Mal durch eine Benutzerseitige Bestätigung abgesichert werden. Das System sendet dazu dem Benutzer Informationen, die dem Benutzer mitteilen, wie die BESTÄTIGUNG 2 zu erfolgen hat. Folgende Varianten sind u. a. möglich:
a. per E-Mail: an den Verkäufer oder den Bezahlpartner
b.auf Web-Site: des Verkäufers oder des Bezahlpartners
c.via Rück-SMS: an den Verkäufer oder den Bezahlpartner

LIEFERN BESTÄTIGUNG 2: Der Benutzer bestätigt seinen Kauf durch eine der in 9 genannten Varianten, die ihrerseits wieder mit den heute und zukünftig adäquaten Mitteln und Möglichkeiten abgesichert sind.

LIEFERUNG: Nach Eingang der gültigen Bestätigung wird die Bezahlung und die Lieferung veranlasst und durchgeführt. Dabei transferiert der Bezahlpartner den fälligen Betrag von einem Konto des Benutzers auf ein Konto des Verkäufers und der Verkäufer versendet den bestellten Artikel an den Benutzer.

Das System darf nicht auf das beschriebene Beispiel des Kaufs eines Artikels beschränkt werden, sondern ermöglicht die verschiedensten Transaktionen, wie Bonus Systeme, Gesundheitsaktivitäten usw. Folglich bestimmt sich der Schutzumfang durch die beigefügten Ansprüche.

## Patentansprüche

1. Verfahren zur drahtlosen Kommunikation eines mobilen Endgerätes eines Benutzers mit einer Anzeigeeinheit, wobei die Anzeigeeinheit mit einem Decoder und einer RFID-Leseeinrichtung verbunden ist, und das mobile Endgerät einen RFID-Tag aufweist, umfassend folgende Schritte:
- Anruf des Decoders durch das mobile Endgerät;
- Steuern der Anzeigeeinheit durch Eingaben in das mobile Endgerät, wobei die Eingaben durch den Decoder umgewandelt werden und als Befehle an die Anzeigeeinheit weitergeleitet werden;
- Auf der Basis eines vorgegebenen Ereignisses in Bezug auf die Anzeigeeinheit und/oder die Befehle des mobilen Endgerätes, liest die RFID-Leseeinrichtung den RFID-Tag des mobilen Endgerätes ein und vervollständigt die Eingaben, die durch das mobile Endgerät bisher über die Tastatur vorgenommen wurden.

2. Das Verfahren nach dem vorhergehenden Anspruch, wobei der Zugriff auf die Daten des RFID-Tags erst nach Eingabe eines Passworts erfolgt.

3. Das Verfahren nach einem oder mehreren der vorhergehenden Ansprüche, wobei der RFID-Tag Adressinformationen und/oder Transaktionsinformationen, wie Karten und/oder Bankdaten, überträgt, die zur Vervollständigung der Eingabe genutzt werden.

4. Das Verfahren nach einem oder mehreren der vorhergehenden Ansprüche, wobei durch die Eingabe eine elektronische Transaktion ausgelöst wird und wobei vorzugsweise zusätzlich zur der RFID-Leseeinrichtung eine RFID-Schreibevorrichtung vorhanden ist, die Daten hinsichtlich der Transaktion auf den RFID-Tag schreibt.

5. Das Verfahren nach einem oder mehreren der vorhergehenden Ansprüche, wobei nach Abschluss der Eingabe eine Bestätigungsnachricht per E-Mail, SMS/MMS erzeugt wird, und dem Benutzer online übermittelt wird.

6. Das Verfahren nach dem vorhergehenden Anspruch, wobei die Bestätigungsnachricht alle ausgewählten Informationen enthält und erneut zur Beantwortung auffordert, damit die Transaktion abgeschlossen wird, wobei die Bestätigungs-E-Mail, SMS/MMS oder http-Request erzeugt wird.

7. Das Verfahren nach einem oder mehreren der vorhergehenden Ansprüche, wobei die Anzeigeeinheit unterschiedliche Modi aufweist,
solange keine interaktive Verbindung mit einem mobilen Endgerät aufgebaut ist, so werden die Informationen kontinuierlich verändert,
sobald eine Verbindung mit dem mobilen Endgerät aufgebaut ist, so wird in den interaktiven Modus gewechselt, wobei die Informationen, die auf der Anzeigeeinheit dargestellt werden, lokal abgelegt sind oder über das Internet von einem zentralen Server erlangt werden.

8. Das Verfahren nach dem vorhergehenden Anspruch, wobei die Transaktionsinformationen ebenfalls auf dem zentralen Server über das Internet abgelegt werden, auf den ein gesicherter Zugriff besteht.

9. Vorrichtung zur drahtlosen Kommunikation mit einem mobilen Endgerät, umfassend:
- eine Anzeigeeinheit in Form eines Displays,
- einen Decoder zur Entgegennahme von Anrufen von mobilen Endgeräten,
- eine RFID-Leseeinrichtung zur Entgegenahme von Informationen aus einem RFID-Tag, das vorzugsweise auf dem mobilen Endgerät abgelegt ist,
- eine Bearbeitungseinheit, die die Komponenten so steuert, dass nach dem Aufbau der Verbindung des mobilen Endgerätes mit dem Decoder, die Tastatursignale des mobilen Endgerätes interpretiert werden, um die Informationen, die auf der Anzeigeeinheit angezeigt werden, zu steuern,
wobei beim Eintreten eines vorgegebenen Ereignisses die RFID-Leseeinrichtung aktiviert wird, um die Informationen, die über die Tastatur eingegeben wurden, durch die Informationen des RFID-Tags zu vervollständigen.

10. Die Vorrichtung nach dem vorhergehenden Anspruch,
wobei Mittel vorhanden sind, um den Zugriff auf die Daten des RFID-Tags erst nach Eingabe eines Passworts zuzulassen.

11. Die Vorrichtung nach einem oder mehreren der vorhergehenden Vorrichtungsansprüche, wobei die RFID-Leseeinrichtung vom RFID-Tag Adressinformationen und/oder Transaktionsinformationen, wie Karten und/oder Bankdaten, liest, die zur Vervollständigung der Eingabe genutzt werden, und wobei vorzugsweise
zusätzlich zur der RFID-Leseeinrichtung eine RFID-Schreibevorrichtung vorhanden ist, die Daten in Bezug auf die Transaktion auf den RFID-Tag schreibt

12. Die Vorrichtung nach einem oder mehreren der vorhergehenden Vorrichtungsansprüchen, wobei Mittel vorhanden sind, die aufgrund der Eingabe eine elektronische Transaktion auslösen.

13. Die Vorrichtung nach einem oder mehreren der vorhergehenden Vorrichtungsansprüche, wobei ein Netzwerkanschluss und Mittel vorhanden sind, um nach Abschluss der Eingabe eine Bestätigungsnachricht per E-Mail, SMS/MMS zu erzeugen, die dem Benutzer online übermittelt wird,wobei
vorzugsweise die Bestätigungsnachricht alle ausgewählten Informationen enthält und erneut zur Beantwortung auffordert, damit die Transaktion abgeschlossen wird,
wobei die Bestätigungs-E-Mail, SMS/MMS oder http-Request erzeugt wird..

14. Die Vorrichtung nach einem oder mehreren der vorhergehenden Ansprüche, wobei Mittel vorhanden sind, um unterschiedliche Modi bereitzustellen,
solange keine interaktive Verbindung mit einem mobilen Endgerät aufgebaut ist, so werden die Informationen kontinuierlich verändert,
sobald eine Verbindung mit dem mobilen Endgerät aufgebaut ist, so wird in den interaktiven Modus gewechselt, wobei die Informationen, die auf der Anzeigeeinheit dargestellt werden, lokal ablegt sind oder über eine Netzwerkschnittstelle aus dem Internet von einem zentralen Server erlangt werden.

15. Die Vorrichtung nach dem vorhergehenden Anspruch, wobei Mittel vorhanden sind, um die Transaktionsinformationen ebenfalls auf dem zentralen Server über das Internet abzulegen werden, auf den ein gesicherter Zugriff besteht.

16. Computerprogrammprodukt mit einer Datenstruktur, die nach dem Laden in einen Computer ein Verfahren nach einem oder mehreren der vorhergehenden Ansprüche ausführt
